# EUROPEAN PATENT SPECIFICATION

(11) **EP 0 642 551 B1**
(45) Date of publication and mention of the grant of the patent: **04.09.1996**
(21) Application number: 93914302.0
(22) Date of filing: 01.06.1993
(51) Int. Cl.: C08L 33/16, D06M 15/277

(54) **CROSSLINKABLE FLUOROPOLYMER COMPOSITIONS**
Vernetzbare Fluorpolymer Zusammensetzungen
COMPOSITIONS DE FLUOROPOLYMERES RETICULABLES

(30) Priority: 01.06.1992 US 891101
(43) Date of publication of application: 15.03.1995
(73) Proprietor: AlliedSignal Inc., Morristown, New Jersey 07962-2245 (US)
(72) Inventor: AHARONI, Shaul, M., Morris Plains, NJ 07950 (US)
(74) Representative: Brock, Peter William
(86) International application number: US9305214
(87) International publication number: WO9324569

(56) References cited:
- US-A- 5 061 769

## Description

### Field of the Invention

This invention provides crosslinking fluoropolymer compositions suitable for making coatings such as protective coatings, release coatings, optical coatings; for use as an adjuvant for other polymeric compositions; and for encapsulating applications.

### Background of the Invention

Fluoropolymers have found widespread use in demanding applications where their non-stick properties, good thermal and chemical resistance, toughness and abrasion resistance are being used to advantage, such as in coatings.

The present invention provides two-component (or multi-component) compositions of fluorinated polymers, which components each carry different active groups which are capable of forming crosslinks without use of crosslinking agents. The individual components can be made under free-radical polymerization conditions. These components are mixed in desired proportions to obtain crosslinkable compositions, which can be cured, as by application of heat. The cross-linked compositions are amorphous and optically clear, and have low refractive indexes. Coatings of these cross-linked compositions are strongly adherent to substrates, including glass, polymer films and crystal substrates. They also have good flexibility, toughness, and abrasion resistance.

### Summary of the Invention

In accordance with the present invention, there are provided novel crosslinkable fluoropolymer composition comprising a first polymeric component A, and a second polymeric component B, each having the general formula 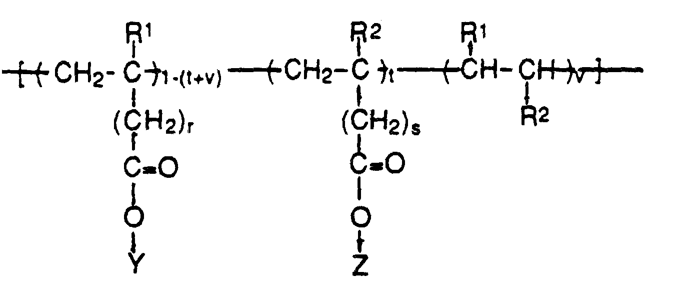 wherein
(1) r and s are independently 0 or 1;
(2) t and v each ranges from 0 to about 0.5;
(3) (t + v) ranges from 0 to about 0.5;
(4) Y is a -(CH₂)_{q}-R_{F} group, wherein
   (a) -(CH₂)_{q}- may be straight chain or branched, and q is an integer of from 1 to about 18;
   (b) -R_{F} is a fluoroalkyl group, straight chain or branched, having from 1 to about 40 carbon atoms, and having at least one terminal -CF₂X group wherein X is H or F;
(5) Z is a crosslinking group selected from the group consisting of H, -(CH₂CH₂-O)ₘ-CH₂-FM and -(CH₂)ₘ-FM, wherein m is an integer of from 1 to about 18; and H and FM each are terminal functional moieties, wherein FM is -NH₂, 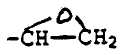 or -CR₂-OH;
(6) R¹ and R² are independently selected from the group consisting of
   (a) H;
   (b) -CH₃;
   (c) -COOY;
   (d) -COOZ;
   (e) -COOR³, or mixtures thereof,
   wherein Y and Z each have the afore-stated meaning, and R³ is alkyl, straight chain or branched, having from 1 to about 18 carbon atoms;
with the provisos that:
(1) (t + v) and r may not both be 0 together;
(2) when (t + v) is 0, R¹ must provide the crosslinking group Z;
(2) in each of first polymeric component A and second polymeric component B, the crosslinking group Z may only contain one type of terminal functional moiety H, -NH_{2,} 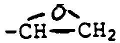 or -CH₂-OH;
(3) the terminal functional moiety in crosslinking group Z in first polymeric component A must be different from the terminal functional moiety in crosslinking group Z in the second polymeric component B; and
(4) first polymeric component A and second polymeric component B provide their respective terminal functional moiety H, -NH_{2,} 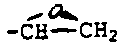 or -CH₂-OH in molar ratio of from about 1:2 to about 2:1.

The polymeric components of the compositions of this invention generally are copolymers. The term copolymer is intended to refer to a polymer derived from at least two or more different monomer units. Within the above-stated limitations, there is no theoretical limit on the number of different monomer units which may be incorporated into these polymeric components; their number is limited only by the usual practical limitations imposed by polymerization process considerations, and the desire to obtain polymer products having useful properties. There is also no limitation on the sequence in which the monomeric components may be arranged within each of the polymeric components, if they are copolymers.

The individual polymeric components can be prepared by polymerizing appropriate monomers, suitably in solution in tetrahydrofuran ("THF") or glacial acetic acid, at elevated temperature with a free-radical generating initiator, using conventional procedures. They may also be polymerized in suspension or dispersion, such as an aqueous suspension or dispersion. The resultant polymer component can be recovered from the polymerization medium in conventional manner.

To obtain the crosslinking compositions of the present invention, the polymeric components are blended, in the afore-stated proportions. Blending may be accomplished in liquid media by mixing their solutions, suspensions or dispersions; by mixing their melts; or by dry-blending, typically in dry powder form.

The crosslinking fluoropolymer compositions are characterized in that they are mixtures of polymeric compositions, each of which provides an active moiety for crosslinking, which, by reacting with each other, form desired crosslinks. The active moieties (terminal functional moieties) for crosslinking are provided by crosslinking group Z; these moieties are H, -NH_{2,} 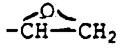 and -CH₂-OH.

The present compositions can be crosslinked by heat treatment without the use of crosslinking agents. Crosslinking proceeds readily at temperatures in the range of from about 75°C to about 180°C, within time periods of from about 5 minutes to about 4 hours. Degree of crosslinking can be varied and controlled by choice of crosslinking time and temperature. Ordinarily, crosslinking will be carried out after the fluoropolymer composition has been fabricated into desired form, such as a coating, a film, an encapsulation, and the like. Heat-induced crosslinking has the advantage that no crosslinking agent is required, so that no impurities are introduced; the cured polymer is a single component without residual solvent, monomer or crosslinking agents. Such crosslinking improves hardness, scratch resistance and adhesion of the polymer film, without change in refractive index, and without deleterious effect on any other desirable property. Of course, crosslinking drastically reduces solubility in solvents.

Depending on the molar ratios of fluorinated to unfluorinated groups, the crosslinking fluoropolymer compositions are soluble (before crosslinking) at concentrations of over 2 wt./vol.% in mixtures of from 1:2 to 2:1 of THF and 1,3-bis(trifluoromethyl)benzene (hexafluoroxylene - HFX); in 3M Company's Fluorinert FC-75 solvent; in trichlorotrifluoroethane (TCTFE); in mixtures of Fluorinert FC-75 with TCTFE; and in mixtures of TCTFE with HFX. From such solutions - or from dispersions or suspensions, such as aqueous dispersions and suspension as may be obtained from polymerization in aqueous media, or from polymerization mixtures based on glacial acetic acid as polarization medium - coatings can be applied to any suitable substrate, and films can be cast. Following evaporation of the liquid medium, the fluoropolymer composition may be cured by crosslinking, as above described.

The crosslinking fluoropolymer compositions of this invention are suitable for making coatings such as optical coatings, anti-static coatings, and release coatings; for encapsulation of electrical and optical devices and components; and for similar applications. In powder form, they can be compression molded at temperature in the order of 75°C to about 110°C before crosslinking sets in, and then crosslinked at higher temperatures in the order of above about 120°C, say between about 125°C to about 180°C. Selection of appropriate molding and curing (crosslinking) temperatures is within the ordinary skill of the art.

### Detailed Description of the Invention

The following detailed description sets forth the preferred embodiments and the best mode presently contemplated for the practice of the invention.

The starting materials (monomers) for making the individual polymeric components (polymeric component A and polymeric component B) for the fluoropolymer compositions of the present invention are known compounds. Some are commercially available; the others can be made using conventional procedures. Those fluorine-containing units (the units bearing the Y group) wherein r is 0 are based on the corresponding fluorine-containing acrylate or methacrylate monomers; when r is 1, the fluorine containing units are based on the monoesters and/or the diesters of itaconic acid; and when v is greater than 0, the composition will contain fluorine-containing units based on monoesters and/or diesters of fumaric acid and/or maleic acid.

Many of the fluorine-containing acrylates or methacrylates are commercially available, as mixtures of homologues having perfluoroalkyl groups of varying chain length. Out of these, one could separate individual compounds of defined perfluoroalkyl chain length, if desired for any reason, but this is ordinarily not necessary. Indeed, if the product is to be used for optical purposes, it is desirable to use monomer having a wider R_{F} chain length distribution, since such wider distribution makes for better amorphicity, hence greater optical clarity, as will the use of mixtures of different monomeric units, as of acrylates (wherein in the above formula R¹ is H and r is 0) with methacrylates (wherein in the above formula R¹ is -CH₃ and r is 0), and itaconates and its diesters (wherein in the above formula r is 1), and/or of the maleates and/or fumarates (wherein in the above formula v is greater than 0). Specific examples of suitable fluorinated monomers include products sold by DuPont under its "Zonyl" trademark, e.g. Zonyl TM (methacrylate) and Zonyl TA-N (acrylate), and sold by Hoechst-Celanese under its "NUVA-HF" and "Fluowet MAE" trademarks. Such specific examples include mixed perfluroalkylethylene acrylates and methacrylates wherein n is predominantly an even number, and in particular wherein the perfluoroalkyl group is represented by a mixture of C₄ through C₂₀ groups, particularly C₆, C₈, C₁₀ and C₁₂ groups.

The non-fluorinated monomers for the polymeric components are derived from acrylic acid, methacrylic acid, itaconic acid, fumaric acid and maleic acid, and their esters (including the diesters of itaconic, fumaric and maleic acid), or mixtures thereof. All of these are either commercially available, or readily prepared by those skilled in the art using known procedures.

Polymerization of the monomers to make the individual polymeric components for the crosslinking fluoropolymer compositions proceeds readily in solution in THF or glacial acetic acid, at elevated temperature within the range of from about 35°C to the boiling point of the polymerization mixture, more desirably within the range of from about 45°C to the atmospheric pressure boiling point of the solvent, about 65°C for THF and about 110°C for glacial acetic acid, under autogenous pressure, typically atmospheric pressure, using a free radical generating initiator, such as 2,2'-azobis(2-methylpropanenitrile) (CAS #78-67-1) available from DuPont under the designation VAZO 64 ("AIBN"). Other suitable initiators include dimethyl-2,2'azobis(isobutyrate) ("MAIB"), 2,2'-azobis(2,4-dimethylpentanenitrile) (CAS # 4419-11-8) and 2,2'-azobis(2-methylbutanenitrile) (CAS # 13472-08-7). The AIBN and MAIB are preferred.

The catalyst is employed in amount of from about 0.15 to about 0.4 wt.%, based on the combined weight of all the monomers to be polymerized. Desirably, polymerization is conducted under agitation. Typical polymerization times range from about 4 hours to about 8 hours. The monomer concentration in the reaction medium typically ranges from about 35 to about 70 percent by weight, based on the combined weight of reaction medium (THF or glacial acetic acid) and the monomers.

Upon conclusion of the polymerization reaction, the polymer product is readily recovered from the reaction mixture, as by evaporation of the solvent and/or cooling the mixture to precipitate the polymer product, followed by separation of liquid and solid phases, as by filtration, and washing of the polymer product to remove residual unreacted monomers using any suitable solvent, if desired. These operation are conventional.

### Example 1

Preparation of fluorinated mono-itaconate: Perfluoroalkylethanol mixture (DuPont's Zonyl BA ™) was dissolved in tetrahydrofuran (THF) with slight warming. To this, a solution of itaconyl chloride (Aldrich, CAS # 1931-60-8) was added to reach equimolarity. followed by dropwise addition of pyridine. Under constant stirring the reaction was permitted to proceed at temperature below about 60°C for time period of up to 24 hours. The solvent was then stripped by evaporation, and the residue was washed with water to remove the pyridine.HCl by-product, and to hydrolyze any unreacted acid chloride. The monomer was then washed with methanol remove as much as possible of the unreacted perfluoroalkylethanol. The resultant desired itaconic acid monoester was dried *in vacuo* at room temperature.

The preparation of fluorinated monofumarate is carried out in analogous fashion, starting with fumaryl chloride (Aldrich, CAS # 627-63-4). The preparation of fluorinated monomalonate is carried out using maleic anhydride in perfluoroalkylethanol in the presence of catalytic amounts of strong inorganic acid. All of these involve conventional reaction mechanisms.

Unfluorinated itaconic acid monoesters can be prepared in similar fashion from appropriate alcohols following the procedure of Cowie et al., Brit. Polymer J. **9**, 241 (1977). Monoesters of fumaric acid are commercially available; the monoesters of maleic acid are conveniently made reacting maleic anhydride with the desired alcohol.

Epoxy terminated itaconates can be prepared under basic conditions from glycidol and itaconyl chloride, in the manner shown in Example 1. In similar fashion, epoxy terminated fumarates and maleates can be prepared by the reaction of glycidol with fumaryl chloride or maleic anhydride, respectively.

Hydroxy-terminated itaconates, fumarates or maleates can be prepared by reacting itaconyl chloride, fumaryl chloride or maleic anhydride, respectively, with a very large excess of aliphatic diols (to minimize the formation of potentially crosslinkable difunctional monomers) in the presence of an organic base.

The preparation of diesters of itaconic, maleic or fumaric acid generally requires more demanding conditions than preparation of the monoesters. General procedures are described in Vogel's Textbook of Practical Organic Chemistry, 5th Ed. Longman Scientific & Technical, U.K.1989, pp. 547-548, 695-707. When the alcoholic group is rather inert to attack by the reaction medium - as in the case of the perfluoroalkylethanol, for example - then the esterification can be carried out directly between the alcohol and the free acid, as is described (specifically for di-alkyl itaconates) by Velickovic et al., Macromol. Chem. **153**, 207 (1972); Cowie et al., Polymer **16**, 869 (1975); and Yazdani-Pedram et al., Europ. Polymer J. **21**, 461 (1985).

Procedures suitable for the polymerization of the acrylate and methacrylate-based polymeric components for the crosslinking fluoropolymer compositions of this invention are in detail described in my U.S. Patent 5,061,769, to which reference is made hereby.

Polymerization of the mono- and di-esters of itaconic, fumaric or maleic acid to obtain the polymeric components based thereon also employs conventional methods. Depending on the fraction of fluorinated side-groups in the monomer mixture, the polymerization may be carried out in glacial acetic acid or in THF. When the proportion of fluorinated side groups is greater than about 80 mol% of the total amount of side groups, then the preferred solvent for the reaction is glacial acetic acid (occasionally trichlorotrifluoro ethane can be used instead). When the molar fraction of non-fluorinated side groups is larger than about 20 mol%, then THF is the solvent of choice. The monomer to solvent ratio is approximately in the range of 1:4 weight/volume to 2:1 weight/volume, depending on the viscosity of the system. After careful purging with nitrogen, a free radical generating initiator, such as AIBN or MAIB, is added, and the polymerization is carried out over a period of time, generally up to about 12 hours, at temperatures in the order of about 60°C to 65°C (for THF solvent) or 80°C to 85°C (for glacial acetic acid). Work-up is as above described. Polymerization of diesters of fumaric acid to form homo- and copolymers with methacrylates is described by Yoshioka and Otsu, Macromolecules **25**, 2599 (1992).

### Example 2

Preparation of terpolymer with t>0 and v>0:
Eighty wt.% of perfluoroalkylethylene methacrylate (Zonyl-TM)is mixed with 10 wt.% glycidylmethacrylate from which the inhibitor has been removed, and 10 wt.% diethylfumarate in 1:1 vol./wt. amount of THF. With constant stirring, the mixture is heated to dissolve reactants and purged with nitrogen for about 2 hours at temperatures below about 50°C, followed by addition of 0.3 wt.% MAIB free radical initiator. Under continued nitrogen purge, the temperature is raised to 60°C - 65°C, and the polymerization is permitted to continue for about 8 hours. Thereafter, the THF is removed by evaporation, solids are washed, first with water, then with water/methanol, and the washed solids are dried under dynamic vacuum at temperature lower than about 50°C.

### Example 3

Preparation of copolymer wherein t = 0 and v = 0.1:
Ninety wt.% Zonyl-TM are mixed in THF with 10 wt.% monoethylfumarate, at wt.vol. monomer/solvent ratio of about 2:3. After stirring under heating to dissolve, the system is purged with nitrogen, 0.3 wt.% AIBN initiator is added, and polymerization is allowed to proceed under constant stirring and nitrogen purge at temperature of about 65°C. Product recovery is as in Example 2.

### Example 4

Polymeric component A was a copolymer of 90 wt.% of DuPont's Zonyl TM (a perfluoroalkylethyl methacrylate having the general composition CH₂=CCH₃COO(CH₂)₂CₙF₂ₙ₊₁, which was a mixture of compounds of varying n-values, with this approximate distribution: C4 ≈ 4 %; C6 ≈ 34 %; C8 ≈ 29; C10 ≈ 15 %; C12 ≈ 7 %; C14 ≈ 5 % C16 ≈ 3 %; C18 ≈ 2 % and C20 ≈ 1 %); and 10 wt.% 2,3-epoxypropylmethacrylate. Polymeric component B was a copolymer of 90 wt.% of DuPont's Zonyl TM and 10 wt.% of methacrylic acid. Solutions of components A and B in 1:1 THF/hexafluoroxylene (THF/HFX) were mixed in about 1:1 molar ratio. The mixture was allowed to dry, and the dried mixture was heated. After 90 min. at 120°C some crosslinking occurred. A separate sample was heated at 150°C, and more crosslinking occurred. The crosslinked system swelled in boiling 1:1 THF/HFX, but did not dissolve. The material strongly adhered to an aluminum surface.

In general, the THF/HFX mixture is a good solvent for the crosslinkable fluoropolymer compositions. Other solvents and solvent mixtures can be employed, so long as both polymeric components are soluble in the solvent. Often, this means that, for any given pair of polymeric components, the ratio of fluorinated to non-fluorinated groups should be close, more or less. In general, polymers based on less than about 5 wt.% of non-fluorinated monomers dissolve very well in Fluorinert FC-75 alone, in TCTFE alone, or in mixtures thereof. Polymeric components based on about 8 or more wt.% of non-fluorinated monomers are generally very soluble in THF/HFX mixtures. The optimum ratio of THF:HFX is a function of the composition of the polymeric components: the higher the weight fraction of non-fluorinated monomer, the higher the amount of THF. Useful proportions in general range about 1:2 THF/HFX to about 2:1 THF/HFX. For the 5wt.% to about 8 wt.% non-fluorinated monomer range, TCTFE/HFX is an excellent solvent mixture.

The fluoropolymer compositions can also be crosslinked employing conventional crosslinking agents, such as, for example, diisocyanates, carbodiimides, diacid chlorides, diepoxides and the like. Examples of specific effective crosslinking agents include hexamethylenediisocyanate, methylene di-p-phenyldiisocyanate, 1,3-dicyclohexyl carbodiimide, dodecanedioyl dichloride, adipoyl chloride and diglycidyl of bisphenol A. The crosslinking agents are used in amounts conventionally employed to obtain desired crosslinking of the polymer which, by use of such agents, can take place at ambient temperatures.

With reference to the afore-stated formula for the polymeric compositions of the present invention, the following are preferred embodiments:

The Y units are preferably straight chain; the q in the Y units preferably is an integer of from 1 - 12, more preferably from 1 - 8, and most preferably from 1 - 2.

The R_{F} in the Y units preferably contains from 1 - 36, more preferably from 2 - 24, and most preferably from 4 - 20 carbon atoms. If the composition is to be used for optical purposes, then R_{F} preferably represents a mixture of units of straight and branched chains, to decrease the refractive index and to increase amorphicity. The terminal -CF₂X group in R_{F} is peferably a -CF₃ group.

The Z units preferably provide mixed epoxy and -CH₂OH groups, e.g. epoxy groups in polymeric component A and -CH₂OH groups in polymeric component B. Other preferred combinations are epoxy with H; and epoxy with -NH₂. Further, within the Z groups, m is preferably an integer of from 1 - 8, more preferably from 1 - 4, and most preferably from 1 - 2. Within the Z groups, the molar ratio of terminal functional moieties H and FM in first and second polymeric components A and B is ideally 1:1, may range from about 1:2 to about 2:1; is preferably from about 1:1.5 to about 1.5:1; and more preferably yet within the range of from about 1.2:1 to about 1:1.2.

The R³ units are preferably linear alkyl groups. The preferred carbon content of the R³ groups ranges from 1 to about 12, more preferably from 1 to about 8, and most preferred from 1 to about 4.

## Claims

1. A crosslinkable fluoropolymer composition comprising a first polymeric component A, and a second polymeric component B, each having the general formula 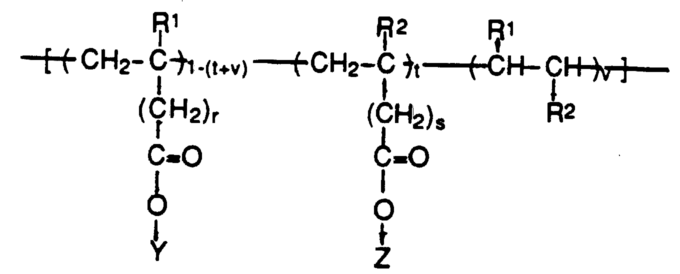 wherein
(1) r and s are independently 0 or 1;
(2) t and v each ranges from 0 to about 0.5;
(3) (t + v) ranges from 0 to about 0.5;
(4) Y is a -(CH₂)_{q}-R_{F} group, wherein
(a) -(CH₂)_{q}- may be straight chain or branched, and q is an integer of from 1 to about 18;
(b) -R_{F} is a fluoroalkyl group, straight chain or branched, having from 1 to about 40 carbon atoms, and having at least one terminal -CF₂X group wherein X is H or F;
(5) Z is a crosslinking group selected from the group consisting of H, -(CH₂CH₂-O)ₘ-CH₂-FM and -(CH₂)ₘ-FM, wherein m is an integer of from 1 to about 18; and H and FM each are terminal functional moieties, wherein FM is -NH_{2,} 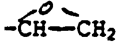 or -CH₂-OH;
(6) R¹ and R² are independently selected from the group consisting of
(a) H;
(b) -CH₃;
(c) -COOY;
(d) -COOZ;
(e) -COOR³, or mixtures thereof,
wherein Y and Z each have the afore-stated meaning, and R³ is alkyl, straight chain or branched, having from 1 to about 18 carbon atoms;
with the provisos that:
(1) (t + v) and r may not both be 0 together;
(2) when (t + v) is 0, R¹ must provide the crosslinking group Z;
(2) in each of first polymeric component A and second polymeric component B, the crosslinking group Z may only contain one type of terminal functional moiety H, -NH_{2,} 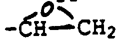 or -CH₂-OH;
(3) the terminal functional moiety in crosslinking group Z in first polymeric component A must be different from the terminal functional moiety in crosslinking group Z in the second polymeric component B; and
(4) first polymeric component A and second polymeric component B provide their respective terminal functional moiety H, -NH_{2,} 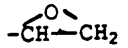 or -CH₂-OH in molar ratio of from about 1:2 to about 2:1.

2. The composition of claim 1 wherein v is 0.

3. A solution of a composition of claim 1 in an organic solvent.

4. The solution of claim 3 wherein the organic solvent is a mixture of tetrahydrofuran and hexafluoroxylene.

5. An aqueous suspension of a composition of claim 1.

6. A substrate having deposited thereon a composition according to claim 1.

7. A composition of claim 1 in film form.

8. A crosslinked composition according to claim 1.

9. The substrate of claim 6 wherein the composition according to claim 1 is a crosslinked composition.

10. The method of crosslinking a composition according to claim 1 which comprises heating said composition at temperature above about 100°C.

## Patentansprüche

1. Vernetzbare Fluorpolymer-Zusammensetzung, enthaltend eine erste polymere Komponente A und eine zweite polymere Komponente B, jeweils mit der allgemeinen Formel 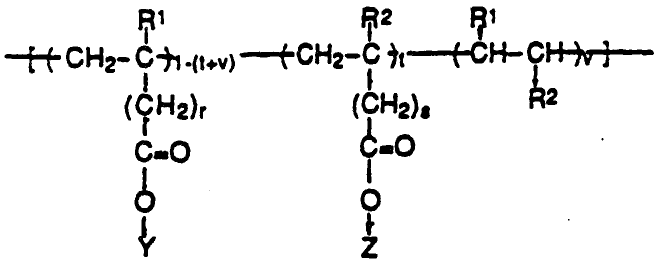 worin
(1) r und s unabhängig voneinander gleich 0 oder 1 sind;
(2) t und v jeweils im Bereich von 0 bis etwa 0,5 liegen;
(3) (t+v) im Bereich von 0 bis etwa 0,5 liegt;
(4) Y eine -(CH₂)_{q}-R_{F}-Gruppe bedeutet, wobei
(a) -(CH₂)_{q}- geradkettig oder verzweigt sein kann und q eine ganze Zahl von 1 bis etwa 18 bedeutet;
(b) -R_{F} eine geradkettige oder verzweigte Fluoralkylgruppe mit 1 bis etwa 40 Kohlenstoffatomen und mindestens einer endständigen -CF₂X-Gruppe, worin X für H oder F steht, bedeutet;
(5) Z eine aus der Gruppe, bestehend aus H, -(CH₂CH₂-O)ₘ-CH₂-FM und -(CH₂)ₘ-FM, worin m eine ganze Zahl von 1 bis etwa 18 bedeutet und H und FM jeweils endständige funktionelle Molekülteile bedeuten, wobei FM für -NH₂, 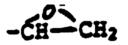 oder -CH₂-OH steht, ausgewählte vernetzende Gruppe bedeutet
(6) R¹ und R² unabhängig voneinander aus der Gruppe, bestehend aus
(a) H;
(b) -CH₃;
(c) -COOY;
(d) -COOZ;
(e) -COOR³ oder deren Gemischen ausgewählt sind, wobei Y und Z jeweils die oben angegebene Bedeutung haben und R³ für eine geradkettige oder verzweigte Alkylgruppe mit 1 bis etwa 18 Kohlenstoffatomen steht;
mit den Maßgaben, daß:
(1) (t+v) und r nicht beide zusammen gleich 0 sein dürfen;
(2) wenn (t+v) gleich 0 ist, R¹ die vernetzende Gruppe Z stellen muß;
(3) die vernetzende Gruppe Z in der ersten polymeren Komponente A und in der zweiten polymeren Komponente B jeweils nur eine Art von endständigen funktionellen Molekülteilen H, -NH₂, 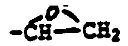 oder -CH₂-OH enthalten darf;
(4) der endständige funktionelle Molekülteil in der vernetzenden Gruppe Z dem ersten polymeren Komponente A von dem endständigen funktionellen Molekülteil in der vernetzenden Gruppe Z der zweiten polymeren Komponente B verschieden sein muß und
(5) die erste polymere Komponente A und die zweite polymere Komponente B ihren jeweiligen endständigen funktionellen Molekülteil H, -NH₂, 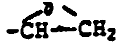 oder -CH₂-OH in einem Molverhältnis von etwa 1:2 bis etwa 2:1 liefern.

2. Zusammensetzung nach Anspruch 1, wobei v gleich 0 ist.

3. Lösung der Zusammensetzung gemäß Anspruch 1 in einem organischen Lösungsmittel.

4. Lösung nach Anspruch 3, wobei es sich bei dem organischen Lösungsmittel um ein Gemisch aus Tetrahydrofuran und Hexafluorxylol handelt.

5. Wäßrige Suspension einer Zusammensetzung gemäß Anspruch 1.

6. Substrat, auf das eine Zusammensetzung gemäß Anspruch 1 aufgebracht ist.

7. Zusammensetzung nach Anspruch 1 in Folienform.

8. Vernetzte Zusammensetzung gemäß Anspruch 1.

9. Substrat nach Anspruch 6, wobei es sich bei der Zusammensetzung gemäß Anspruch 1 um eine vernetzte Zusammensetzung handelt.

10. Verfahren zur Vernetzung einer Zusammensetzung gemäß Anspruch 1, bei dem man die Zusammensetzung bei einer Temperatur über etwa 100°C erhitzt.

## Revendications

1. Composition de polymère fluoré réticulable, comprenant un premier composant polymère A et un second composant polymère B, chacun répondant à la formule générale 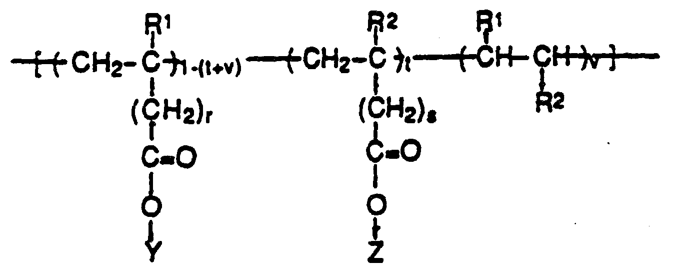 dans laquelle
(1) r et s sont indépendamment 0 ou 1;
(2) t et v s'échelonnent chacun de 0 à environ 0,5;
(3) (t + v) s'échelonne de 0 à environ 0,5;
(4) Y est un groupe -(CH₂)_{q}-R_{F}, dans lequel
(a) -(CH₂)_{q}- peut être à chaîne linéaire ou ramifiée, et q est un nombre entier de 1 à environ 18;
(b) -R_{F} est un groupe fluoroalkyle, à chaîne droite ou ramifiée, comportant de 1 à environ 40 atomes de carbone, et possédant au moins un groupe -CF₂X terminal dans lequel X est H ou F;
(5) Z est un groupe de réticulation choisi dans l'ensemble constitué par H, -(CH₂CH₂-O)ₘ-CH₂-FM et -(CH₂)ₘ-FM, où m est un nombre entier de 1 à environ 18; et H et FM sont chacun des groupements fonctionnels terminaux, dans lesquels FM est -NH₂, 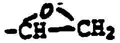 ou -CH₂-OH
(6) R¹ et R² sont choisis indépendamment dans l'ensemble constitué par
(a) H;
(b) -CH₃;
(c) -COOY;
(d) -COOZ;
(e) -COOR³, ou leurs mélanges,
où Y et Z ont chacun la signification donnée ci-dessus, et R³ est un groupe alkyle, à chaîne droite ou ramifiée, comportant de 1 à environ 18 atomes de carbone;
à condition que:
(1) (t + v) et r ne soient pas ensemble égaux à 0;
(2) lorsque (t + v) est égal à 0, R¹ doit apporter le groupe de réticulation Z;
(3) dans chaque composant polymère, le premier A et le second B, le groupe de réticulation Z ne peut contenir qu'un type de groupement fonctionnel terminal H, -NH₂, 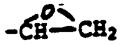 ou -CH₂-OH;
(4) le groupement fonctionnel terminal, dans le groupe de réticulation du premier composant polymère A, doit être différent du groupement fonctionnel terminal dans le groupe de réticulation Z du second composant polymère B; et
(5) le premier composant polymère A et le second composant polymère B apportent leur groupement fonctionnel terminal respectif H, -NH₂, 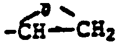 ou -CH₂-OH dans un rapport molaire d'environ 1:2 à environ 2:1.

2. Composition de la revendication 1, dans laquelle v est nul.

3. Solution d'une composition selon la revendication 1 dans un solvant organique.

4. Solution selon la revendication 3, dans laquelle le solvant organique est un mélange de tétrahydrofurane et d'hexafluoroxylène.

5. Suspension aqueuse d'une composition de la revendication 1.

6. Substrat sur lequel est déposée une composition selon la revendication 1.

7. Composition de la revendication 1, sous forme de film.

8. Composition réticulée selon la revendication 1.

9. Substrat de la revendication 6, dans lequel la composition selon la revendication 1 est une composition réticulée.

10. Procédé de réticulation d'une composition selon la revendication 1, qui comprend le chauffage de ladite composition à une température supérieure à environ 100°C.
